# EUROPÄISCHE PATENTANMELDUNG

(11) **EP 1 493 549 A2**
(43) Veröffentlichungstag der Anmeldung: **05.01.2005**
(21) Anmeldenummer: 04015030.2
(22) Anmeldetag: 25.06.2004
(51) Int. Cl.: B29C 70/44

(54) **Verfahren und Vorrichtung zur Herstellung eines Faserverbundwerkstoff-Bauteils**

(30) Priorität: 03.07.2003 DE 10330919
(71) Anmelder: Deutsches Zentrum für Luft- und Raumfahrt e.V., 53175 Bonn (DE)
(72) Erfinder: Kocian, Frank, 48165 Münster (DE)
(74) Vertreter: HOEGER, STELLRECHT & PARTNER Patentanwälte

(57) **Zusammenfassung**

Es wird ein Verfahren zur Herstellung eines Bauteils aus einem Faserverbundwerkstoff mit einer Matrix, in die Fasern eingelagert sind, vorgeschlagen, bei dem bei fließfähigem oder kriechfähigem Matrixmaterial ein hydrostatischer Druck auf einen Bauteil-Vorkörper ausgeübt wird.

## Beschreibung

Die Erfindung betrifft ein Verfahren zur Herstellung eines Bauteils aus einem Faserverbundwerkstoff, bei welchem in einer Matrix Fasern eingelagert sind.

Die Matrixmaterialien, bei denen es sich um Kunststoffmaterialien oder Metalle handelt, und die Fasermaterialien haben unterschiedliche physikalische Eigenschaften. Dies kann im Verbund zu Problemen führen.

Der Erfindung liegt die Aufgabe zugrunde, ein Verfahren zur Herstellung eines Faserverbundwerkstoff-Bauteils zu schaffen, durch das sich die mechanischen Eigenschaften des hergestellten Bauteils gezielt beeinflussen lassen.

Diese Aufgabe wird erfindungsgemäß dadurch gelöst, daß bei fließfähigem oder kriechfähigem Matrixmaterial ein hydrostatischer Druck auf einen Bauteil-Vorkörper ausgeübt wird.

Üblicherweise haben Fasern und Matrix unterschiedliche Kompressionsmodule und E-Module, unterschiedliche thermische Ausdehnungskoeffizienten sowie unterschiedliches Schrumpfverhalten. Dies führt zu Eigenspannungen im (konventionell hergestellten) Faserverbundwerkstoff. Dies hat eine Vorbelastung der Matrix zur Folge, beispielsweise aufgrund von Zugbelastungen in Längsrichtung und Umfangsrichtung bezogen auf eine Faser. Aufgrund von Eigenspannungen können auch Querrisse in der Matrix entstehen. Die Eigenspannungen können zu einer Vorschädigung eines Bauteils führen.

Im Fall einer thermoplastischen Matrix kann das unterschiedliche Verhalten von Fasern und Matrix dazu führen, daß während des Herstellungsprozesses nach Erhitzung beim Abkühlen die Matrix auf die Fasern aufschrumpft. Dadurch wird in einer Faser eine Druckspannung induziert, während die Matrix unter Zugspannung steht. Dies führt dazu, daß in dem hergestellten Bauteil unerwünschte Eigenspannungen vorliegen.

Die geschilderten Probleme treten auch bei duromeren und metallischen Matrixmaterialien auf.

Durch das erfindungsgemäße Verfahren, bei dem ein hydrostatischer Druck auf den Bauteil-Vorkörper ausgeübt wird, läßt sich die Entstehung und/oder Ausbildung der Eigenspannungen gezielt beeinflussen. Insbesondere lassen sich Eigenspannungen reduzieren. Die Matrix unterliegt aufgrund des hydrostatischen Drucks einer erhöhten Komprimierung, wenn die Matrix weicher ist als die Fasern. Bei den technisch relevanten Faserverbundwerkstoffen ist dies in der Regel der Fall. Wenn der hydrostatische Druck reduziert bzw. weggenommen wird, kann sich die Matrix wieder ausdehnen; dadurch wird der Effekt des größeren thermischen Ausdehnungskoeffizienten in gewissem Maße kompensiert. Dies resultiert dann in einer Reduktion der Eigenspannungen im Umfange des aufgebrachten hydrostatischen Drucks.

Durch die erfindungsgemäße Idee, während der Herstellung des Bauteils im fließfähigen oder kriechfähigen Zustand der Matrix einen hydrostatischen Druck auf den Bauteil-Vorkörper aufzubringen, läßt sich je nach Höhe des hydrostatischen Drucks das Eigenspannungsniveau gezielt einstellen. Das Eigenspannungsniveau läßt sich so einstellen, daß die Festigkeit erhöht wird. Es ist aber auch möglich, die Einstellung so durchzuführen, daß beispielsweise Dämpfungseigenschaften gezielt modifiziert werden.

Es lassen sich damit die mechanischen Eigenschaften des Bauteils über die Ausübung des hydrostatischen Drucks auf den Bauteil-Vorkörper gezielt einstellen.

Der hydrostatische Druck kann dabei auf den Bauteil-Vorkörper als Ganzes ausgeübt werden oder auch nur auf einen Teilbereich des Bauteil-Vorkörpers. Im letzten Falle ist in Abhängigkeit von der Formgebung des Teilbereichs der ausgeübte Druck in der Regel nur näherungsweise hydrostatisch.

Eine Fließfähigkeit oder Kriechfähigkeit des Matrixmaterials läßt sich auf einfache Weise (bei gegebenem Spannungsniveau) erreichen, wenn das Matrixmaterial erhitzt wird und dabei die Fließgrenze überschritten wird bzw. ein Kriechniveau erreicht wird. Fließfähig bedeutet dabei, daß das Material bei den vorliegenden Bedingungen eine irreversible Gestaltsänderung durchführen kann. Bei Kriechfähigkeit ist die irreversible Gestaltsänderung zeitabhängig. Das Kriechniveau ist nicht unbedingt ein festliegender Wert.

Günstigerweise ist bei Ausübung des hydrostatischen Drucks die Fließgrenze des Matrixmaterials erreicht oder überschritten oder ist ein Kriechniveau erreicht. Durch Ausübung des hydrostatischen Drucks lassen sich dann Eigenspannungen gezielt beeinflussen, um somit wiederum mechanische Eigenschaften des Bauteils während seiner Herstellung einstellen zu können.

Ganz besonders vorteilhaft ist es, wenn der hydrostatische Druck so gewählt wird, daß die Eigenspannungen im Bauteil beeinflußt werden. Dadurch können die Eigenspannungen beispielsweise gezielt reduziert werden.

Weiterhin ist es günstig, wenn der hydrostatische Druck so gewählt wird, daß die Eigenspannungen im Bauteil gezielt eingestellt werden, um beispielsweise die Eigenspannungen zu reduzieren oder um Dämpfungseigenschaften gezielt einzustellen. Es lassen sich dann Interface-Anbindungen gezielt einstellen.

Um die Eigenspannungen beeinflussen zu können, wird der hydrostatische Druck in Abhängigkeit des Verhältnisses der Kompressibilität der Matrix zur Kompressibilität der Fasern gewählt. Je unterschiedlicher die Kompressibilität, desto geringer braucht der hydrostatische Druck zu sein, um die entsprechende Beeinflussung bei gleicher Fließfähigkeit bzw. Kriechfähigkeit zu erreichen. Umgekehrt muß der hydrostatische Druck größer werden, wenn sich die Kompressibilitätseigenschaften ähnlicher sind. Die Kompressibilität der Fasern sollte dabei niedriger sein als die der Matrix, d.h. die Fasern sollten steifer sein als die Matrix.

Es hat sich als günstig erwiesen, wenn der hydrostatische Druck oberhalb 500 bar liegt und insbesondere im Bereich zwischen 1000 und 20.000 bar liegt. Der notwendige Druck hängt von der Werkstoffkombination ab. Für die Kombination PEEK mit Glasfasern hat sich ein Druck von ca. 2000 bar als günstig erwiesen.

Der hydrostatische Druck wird dabei extern auf den Bauteil-Vorkörper aufgebracht, beispielsweise in einer Stempelvorrichtung.

Es kann dabei vorgesehen sein, daß ein hydrostatischer Druck bereits vor einer Abkühlphase bei Erhitzung des Matrixmaterials ausgeübt wird, wobei der hydrostatische Druck dann (nicht unbedingt mit dem gleichen Wert) während der Abkühlphase beibehalten wird. Es kann eine zeitliche Steuerung der Druckbeaufschlagung vorgesehen sein. Insbesondere kann auch das Kriechverhalten des Matrixmaterials berücksichtigt werden.

Es ist dabei beispielsweise vorgesehen, daß ein hydrostatischer Druck ausgeübt wird, bis der Bauteil-Vorkörper Umgebungstemperatur erreicht.

Es ist ebenfalls vorgesehen, daß hydrostatischer Druck ausgeübt wird, bis der Bauteil-Vorkörper ausgehärtet ist, d. h. bis das Matrixmaterial (bei dem gegebenen Spannungsniveau) nicht mehr fließfähig bzw. kriechfähig ist.

Das erfindungsgemäße Verfahren läßt sich auf vorteilhafte Weise einsetzen, wenn das Matrixmaterial einen höheren thermischen Ausdehnungskoeffizienten hat als das Fasermaterial.

Ferner läßt sich das erfindungsgemäße Verfahren einsetzen, wenn die Fasern ein höheres E-Modul aufweisen als die Matrix. Wenn der E-Modul höher ist, dann ist im allgemeinen auch der Kompressionsmodul höher.

Es ist grundsätzlich möglich, daß die Herstellung der Fließfähigkeit oder Kriechfähigkeit bei einem vorkonsolidierten Bauteil-Vorkörper erfolgt. Dieser vorkonsolidierte Bauteil-Vorkörper kann bereits ausgehärtet sein und er wird dann wieder über die Fließgrenze bzw. auf ein Kriechniveau gebracht, um die Eigenspannungen gezielt einzustellen.

Insbesondere ist es vorteilhaft, wenn die Herstellung der Fließfähigkeit oder Kriechfähigkeit als Teil des Konsolidierungsprozesses des Bauteil-Vorkörpers erfolgt, d. h. wenn der erfindungsgemäße Schritt des Aufbringens eines hydrostatischen Drucks in den Gesamtherstellungsprozeß integriert ist.

Mit dem erfindungsgemäßen Verfahren lassen sich Bauteile mit allen Arten von Faserverbundwerkstoffen herstellen. Insbesondere können diese kurzfaserverstärkt sein. Günstigerweise ist das Faserverbundwerkstoff-Bauteil langfaserverstärkt oder durch Endlosfasern verstärkt. Unter Kurzfasern werden üblicherweise Fasern mit einer Länge bis 3 mm verstanden. Als Endlosfasern werden Fasern bezeichnet, die in der Form von Rovings oder Geweben verarbeitet werden und deren Länge konstruktionsbedingt ist oder durch die geometrische Abmessung des Bauteils bedingt ist. Langfasern haben in der Regel Faserlängen zwischen 3 mm und 50 mm.

Es kann dabei vorgesehen sein, daß das Matrixmaterial ein thermoplastisches Material ist. Es kann sich auch um ein Duromer oder ein metallisches Material handeln.

Es ist beispielsweise vorgesehen, daß zur Herstellung des Bauteils der Bauteil-Vorkörper isostatisch gepreßt wird. Durch die isostatische Pressung läßt sich auf einfache Weise ein hydrostatischer Druck auf den Bauteil-Vorkörper ausüben, um so beispielsweise Eigenspannungen bezogen auf das fertige Bauteil zu reduzieren. Insbesondere findet eine heißisostatische Pressung statt, wobei das Matrixmaterial durch Erhitzen fließfähig oder kriechfähig gemacht wurde.

Insbesondere ist es vorgesehen, daß der Bauteil-Vorkörper beim isostatischen Pressen über eine Glasübergangstemperatur des Matrixmaterials geheizt ist. Dadurch ist das Matrixmaterial fließfähig.

Es hat sich als günstig erwiesen, wenn eine Abkühlung des Bauteil-Vorkörpers bei im wesentlichen konstantem (hydrostatischen) Druck erfolgt. Dadurch läßt sich das Eigenspannungsniveau gezielt einstellen.

Es hat sich ferner als günstig erwiesen, wenn nach der Abkühlung der Druck auf Atmosphärendruck zurückgenommen wird.

Die Erfindung betrifft ferner ein Faserverbundwerkstoff-Bauteil, welches gemäß dem erfindungsgemäßen Verfahren hergestellt ist.

Ein solches Bauteil hat definiert eingestellte mechanische Eigenschaften bezüglich seiner Eigenspannungen, wie oben beschrieben.

Die Erfindung betrifft ferner eine Vorrichtung zur Herstellung eines Faserverbundwerkstoff-Bauteils.

Es liegt dabei die Aufgabe zugrunde, eine Vorrichtung zu schaffen, mit welcher sich ein Faserverbundwerkstoff-Bauteil herstellen läßt, bei dem die mechanischen Eigenschaften gezielt einstellbar sind.

Diese Aufgabe wird bei der genannten Vorrichtung erfindungsgemäß dadurch gelöst, daß eine Erwärmungseinrichtung vorgesehen ist, mit der ein Bauteil-Vorkörper erhitzbar ist, um ein Matrixmaterial fließfähig oder kriechfähig zu machen, und eine Einrichtung zum Ausüben eines hydrostatischen Drucks auf den Bauteil-Vorkörper vorgesehen ist.

Über eine solche Vorrichtung läßt sich der Bauteil-Vorkörper in den (bei gegebenem Spannungsniveau) fließfähigen oder kriechfähigen Zustand überführen und während der Abkühlungsphase läßt sich dann ein hydrostatischer Druck ausüben, um so die Eigenspannungen im Bauteil-Vorkörper und damit im hergestellten Bauteil gezielt beeinflussen zu können.

Beispielsweise umfaßt die Druckausübungseinrichtung einen Preßstempel, um einen Druck erzeugen zu können, der dann als zumindest näherungsweise hydrostatischer Druck auf den Bauteil-Vorkörper ausübbar ist. Beispielsweise kann ein beweglicher Preßstempel und ein unbeweglicher Gegenstempel vorgesehen sein oder es können zwei bewegliche Preßstempel vorgesehen sein.

Ganz besonders vorteilhaft ist es, wenn eine Aufnahme für den Bauteil-Vorkörper vorgesehen ist, durch die der hydrostatische Druck auf den Bauteil-Vorkörper übertragbar ist. In einer solchen Aufnahme läßt sich der Bauteil-Vorkörper kapseln bzw. einbetten oder in einem Fluid lagern, um so eben einen hydrostatischen Druck aufzubringen. Die Aufnahme bzw. eine Lagereinrichtung der Aufnahme ist aus einem Material hergestellt, welches keine oder eine geringe Schubsteifigkeit aufweist.

Es ist dann günstig, wenn der Bauteil-Vorkörper durch die Aufnahme umgeben ist, d. h. in diese eingebettet ist, damit der Bauteil-Vorkörper über seine gesamte Oberfläche gleichmäßig mit Druck beaufschlagbar ist, d. h. ein hydrostatischer Druck ausübbar ist.

Beispielsweise ist die Aufnahme aus Silikon hergestellt.

Ganz besonders vorteilhaft ist es, wenn die Druckausübungseinrichtung so ausgebildet ist, daß während einer Abkühlphase des Bauteil-Vorkörpers ein hydrostatischer Druck ausübbar ist.

Ferner ist es günstig, wenn durch die Druckausübungseinrichtung hydrostatische Drücke größer 500 bar aufbringbar sind.

Die nachfolgende Beschreibung bevorzugter Ausführungsformen dient im Zusammenhang mit der Zeichnung der näheren Erläuterung der Erfindung.

Es zeigen:
- Figur 1: eine Explosionsdarstellung eines Ausführungsbeispiels einer Vorrichtung zur Durchführung des erfindungsgemäßen Verfahrens;
- Figur 2: schematisch ein Ausführungsbeispiel für einen Temperaturverlauf und Druckverlauf bei der Durchführung des erfindungsgemäßen Verfahrens und
- Figuren 3(a), 3(b) und 3(c): schematisch die mikroskopischen Verhältnisse bei der Durchführung des erfindungsgemäßen Verfahrens ausgehend von einem konsolidierten Bauteil-Vorkörper (Figur 3(a)) über Ausübung eines hydrostatischen Drucks (Figur 3(b)) bis zum Endzustand (Figur 3(c)).

Faserverbundwerkstoff-Bauteile, die aus faserverstärkten Werkstoffen hergestellt sind, bestehen aus einer Matrix mit einem Matrixmaterial, in welches die Fasern eingebettet sind. Beispiele solcher faserverstärkten Werkstoffe sind glasfaserverstärktes PEEK oder faserverstärktes Titan (TMC - titanium matrix composite).

Bei der Herstellung eines entsprechenden Bauteils können unerwünschte Eigenspannungen entstehen, die vor allem auf unterschiedliche thermische Ausdehnungskoeffizienten und auf unterschiedliches Schrumpfverhalten von Fasern und Matrix zurückzuführen sind. Die Fasern weisen üblicherweise einen höheren Kompressionsmodul bzw. E-Modul auf als die Matrix. Darüber hinaus ist es in der Regel auch der Fall, daß das Matrixmaterial einen höheren thermischen Ausdehnungskoeffizienten aufweist als das Fasermaterial der eingebetteten Fasern.

Sind beispielsweise Glasfasern in eine thermoplastische Matrix eingebettet, dann führen diese Eigenschaftsunterschiede der Materialien im Verbund dazu, daß beim Herstellungsprozeß beim Abkühlen die Matrix auf die Fasern aufschrumpft. Dadurch wird in einer Faser eine Druckspannung induziert, während die Matrix unter Zugspannung steht. Diese Zugspannung kann zur Folge haben, daß die Matrix in einem Bauteil bei Querbelastung versagt. Die Entstehung von Eigenspannungen in faserverstärkten Kunststoffen ist in dem DFG-Forschungsbericht "Eigenspannung bei viskoelastischen Verbundwerkstoffen", Schn 245/18-1, ES-COMP von E. Schnack und R. Meske, 15. Oktober 1996 beschrieben.

Erfindungsgemäß wird der Aufbau der Eigenspannungen während der Abkühlung gezielt beeinflußt:

Ein Faserverbundwerkstoff-Bauteil wird mittels eines Bauteil-Vorkörpers hergestellt. Dieser Bauteil-Vorkörper wird beispielsweise über einzelne Prepreg-Tapes hergestellt, indem Prepreg-Einzelschichten, welche aus unidirektionalen Fasern in einer Matrix bestehen, zurechtgeschnitten und in Lagen beispielsweise mit verschiedenen Orientierungen übereinandergelegt werden. Diese Prepregs werden dann in einem Autoklaven unter erhöhtem Druck oder unter Vakuumbedingungen und erhöhter Temperatur ausgehärtet bzw. konsolidiert, wobei sich dann während des Härtungsprozesses bzw. Konsolidierungsprozesses der Bauteil-Vorkörper in das eigentliche Faserverbundwerkstoff-Bauteil wandelt.

Erfindungsgemäß ist es nun vorgesehen, daß der Bauteil-Vorkörper so behandelt wird, daß das Matrixmaterial fließfähig oder kriechfähig (bei den relevanten Spannungen) wird. Insbesondere wird der Bauteil-Vorkörper so erhitzt, daß das Matrixmaterial fließfähig wird. Der Bauteil-Vorkörper wird extern mit hydrostatischem Druck beaufschlagt, welcher beim Abkühlen des Bauteil-Vorkörpers wirksam ist. Über diesen hydrostatischen Druck läßt sich der Aufbau von Eigenspannungen beeinflussen und insbesondere gezielt steuern. Die Erhitzung des Bauteil-Vorkörpers, um über die Fließgrenze des Materials der Matrix zu gelangen, ist dabei ein Teil des Herstellungsprozesses des Bauteils.

Es ist aber auch grundsätzlich möglich, daß ein vorkonsolidierter Bauteil-Vorkörper erneut erhitzt wird, um das Matrixmaterial fließfähig oder kriechfähig zu machen und dann beim Abkühlen der hydrostatische Druck wirkt.

Der hydrostatische Druck ist so groß gewählt, daß der Prozeß des Aufschrumpfens der Matrix auf die Fasern beeinflußbar ist. Die absolute Größe des mindestens auszuübenden Drucks hängt dabei vom Verhältnis der Kompressibilität zwischen Matrix und Fasern und der Fließgrenze des Matrixmaterials oder dessen Kriechniveaus ab. Bei einer PEEK-Matrix und Glasfasern liegt dieses Verhältnis beispielsweise in der Größenordnung von 10: 1, während bei einem Titanmatrixkomposit mit SiC-Fasern das Verhältnis in der Größenordnung 4:1 liegt. Im ersteren Fall (Glasfasern in PEEK) haben sich Drücke in der Größenordnung von 2000 bar als sinnvoll erwiesen. Im letzteren Falle (SiC-Fasern in Titan) muß aufgrund der ähnlicheren mechanischen Eigenschaften zwischen Fasern und Matrix ein höherer Druck gewählt werden.

Typische Werte für die aufzubringenden hydrostatischen Drücke liegen je nach Werkstoffkombination zwischen 500 bar und 20.000 bar.

Der hydrostatische Druck wird während der gesamten Abkühlphase des Bauteil-Vorkörpers beibehalten, und zwar so lange, bis der Bauteil-Vorkörper ausgehärtet oder verfestigt ist, d. h. das Matrixmaterial ausgehärtet oder verfestigt ist bzw. bis Umgebungstemperatur erreicht ist. Wenn der hydrostatische Druck wirkt, dann wird die Matrix im fließfähigen Zustand gegenüber der Faser stärker komprimiert. Nach Beendigung des Abkühlvorgangs, wenn der hydrostatische Druck reduziert wird bzw. nicht mehr wirkt, dann kann sich die Matrix wieder ausdehnen. Dieser Vorgang erlaubt in gewissem Maße eine Kompensation bezüglich des höheren thermischen Ausdehnungskoeffizienten der Matrix. Im Umfange des aufgebrachten hydrostatischen Drucks lassen sich die Eigenspannungen reduzieren.

Durch die Größe des aufgebrachten hydrostatischen Drucks läßt sich somit das Eigenspannungsniveau in dem Bauteil einstellen und insbesondere gezielt einstellen. Auch über Variation des hydrostatischen Drucks, welcher auf den Bauteil-Prüfkörper während des Abkühlungsvorgangs wirkt, läßt sich eine solche Einstellung durchführen bzw. verändern.

Eine solche Einstellung kann mit dem Ziel vorgenommen werden, die Eigenspannungen zu reduzieren, um die Festigkeit des Bauteils zu erhöhen.

Sie kann aber auch vorgenommen werden, um gezielte Eigenschaften wie Dämpfungseigenschaften des Bauteils zu erreichen. Beispielsweise können geringere Vorspannungen der Matrix dazu führen, daß die Matrix auf der Faser rutscht. In einem fertigen Bauteil führt dies dazu, daß eine Energiedissipation stattfindet, d. h. daß das Bauteil gewissermaßen mechanische Energie "schluckt". Bauteile mit hoher Dämpfung werden im Triebwerksbau bevorzugt.

Durch das Aufbringen eines hydrostatischen Drucks auf den Bauteil-Vorkörper während dessen Abkühlung, wobei das Kunststoffmaterial der Matrix fließfähig ist, läßt sich in dem Bauteil-Vorkörper eine Verformung erreichen, welche entgegengesetzt der Wärmeausdehnung ist, um so, wie beschrieben, gezielt den Eigenspannungsaufbau beeinflussen zu können.

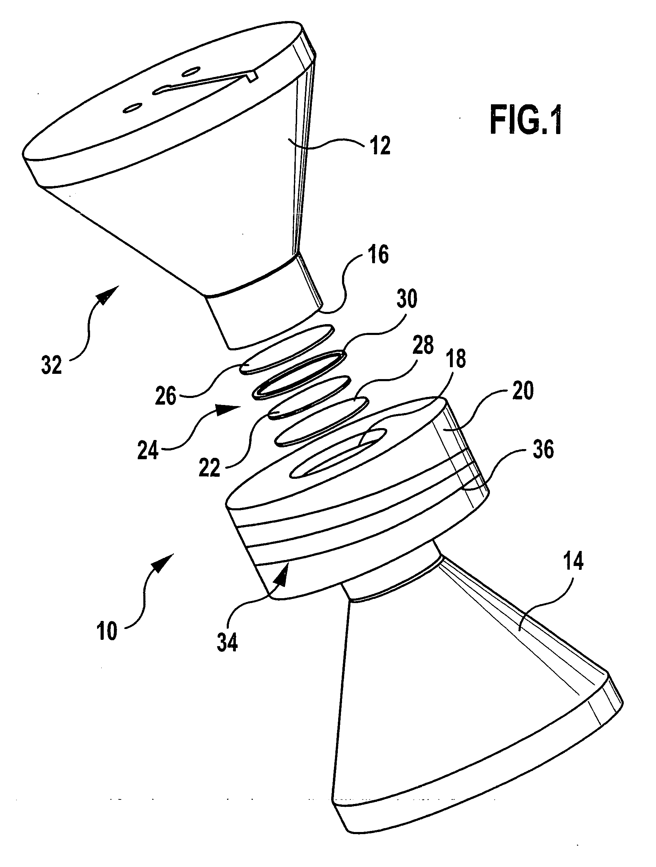

In Figur 1 ist schematisch in Explosionsdarstellung eine Vorrichtung gezeigt, mittels welcher sich das erfindungsgemäße Verfahren durchführen läßt. Diese umfaßt eine als Ganzes mit 10 bezeichnete Stempeleinrichtung mit einem beweglichen Stempel 12 und einem festen oder beweglichen Gegenstempel 14 (Amboß). Der Stempel 12 weist eine im wesentlichen ebene Druckbeaufschlagungsfläche 16 auf. Der Gegenstempel 14 hat eine dazu korrespondierende Druckbeaufschlagungsfläche.

An dem Gegenstempel 14 sitzt eine zylindrische Kammer 18, welche in einem Metallring 20 gebildet ist. Dieser Metallring 20 ist fest mit dem Gegenstempel 14 verbunden. Der Stempel 12 kann mit seiner Druckbeaufschlagungsfläche 16 in die Kammer 18 eintauchen, wobei ein Bauteil-Vorkörper 22 zwischen Stempel 12 und Gegenstempel 14 sitzt.

Für den Bauteil-Vorkörper 22 ist eine als Ganzes mit 24 bezeichnete Aufnahme vorgesehen, über welche der hydrostatische Druck in den Bauteil-Vorkörper 22 eingebracht wird.

Die Aufnahme 24 umfaßt eine erste Platte 26 und eine zweite Platte 28. Zwischen der ersten Platte 26 und der zweiten Platte 28 sitzt ein Ring 30, welcher den Bauteil-Vorkörper 22 umgibt.

Die erste Platte 26, die zweite Platte 28 und der Ring 30 sind aus einem Material hergestellt, über das ein hydrostatischer Druck auf den in der Aufnahme 24 aufgenommenen Bauteil-Vorkörper 22 übertragen wird, wenn der Stempel 12 gegen den Gegenstempel 14 gepreßt wird.

Beispielsweise sind die erste Platte 26, die zweite Platte 28 und der Ring 30 aus temperaturbeständigem Silikon hergestellt.

Der Stempel 12 und der Gegenstempel 14 bilden eine Einrichtung 32 zur Beaufschlagung des Bauteil-Vorkörpers 22 mit hydrostatischem Druck in Zusammenwirkung mit der Aufnahme 24.

Es ist eine Erwärmungseinrichtung 34 vorgesehen, über die sich der Bauteil-Vorkörper 22 in der Kammer 18 so erwärmen läßt, daß das Kunststoffmaterial der Matrix fließfähig wird. Beispielsweise erfolgt eine induktive Heizung, wobei die Erwärmungseinrichtung 34 eine oder mehrere Hochfrequenzspulen 36 umfaßt, welche um den Metallring 20 angeordnet sind.

Mit der beschriebenen Anordnung läßt sich das erfindungsgemäße Verfahren insbesondere für flache Bauteile durchführen.

Das beschriebene Konzept wurde anhand eines Prüflings getestet, welcher nach herkömmlichen Verfahren aus einem Faserverbundwerkstofflaminat hergestellt wurde. Das Matrixmaterial war PEEK; die Faserverstärkung bestand aus Glasfasern. Der Bauteil-Vorkörper wurde mit drei aufeinanderfolgenden 0°-Faserlagen und drei folgenden 90°-Faserlagen gelegt. Er wurde also asymmetrisch hergestellt. Er wurde zwischen ebenen Platten eingespannt konsolidiert. Der asymmetrische Aufbau führt zu Eigenspannungen, die aufgrund der Einspannung zwischen die Platten nach Freigabe der Einspannung zu einer Deformation des Bauteils, d.h. zu einer nicht-ebenen Oberflächenausbildung führen.

Ein Prüfling mit dem gleichen Aufbau wurde dem erfindungsgemäßen Verfahren unterworfen.

Dazu wurde der Prüfling in der Aufnahme 24 in die Kammer 18 gebracht und auf ca. 350°C erhitzt, um das PEEK-Material fließfähig zu machen. Es wurde ein hydrostatischer Druck von ca. 2000 bar ausgeübt, indem der Stempel 12 auf den Gegenstempel 14 zugefahren wurde.

Die Heizung wurde ausgeschaltet, wobei der hydrostatische Druck während der Abkühlphase beibehalten wurde. Nach Erreichen der Umgebungstemperatur wurde der Druck reduziert, d. h. der Stempel 12 wurde dann von dem Gegenstempel 14 weggefahren.

Das hergestellte Bauteil wies eine geringere Deformation als das nach dem herkömmlichen Verfahren hergestellte Bauteil auf. Dies zeigt, daß durch das erfindungsgemäße Verfahren Eigenspannungen beeinflußbar sind.

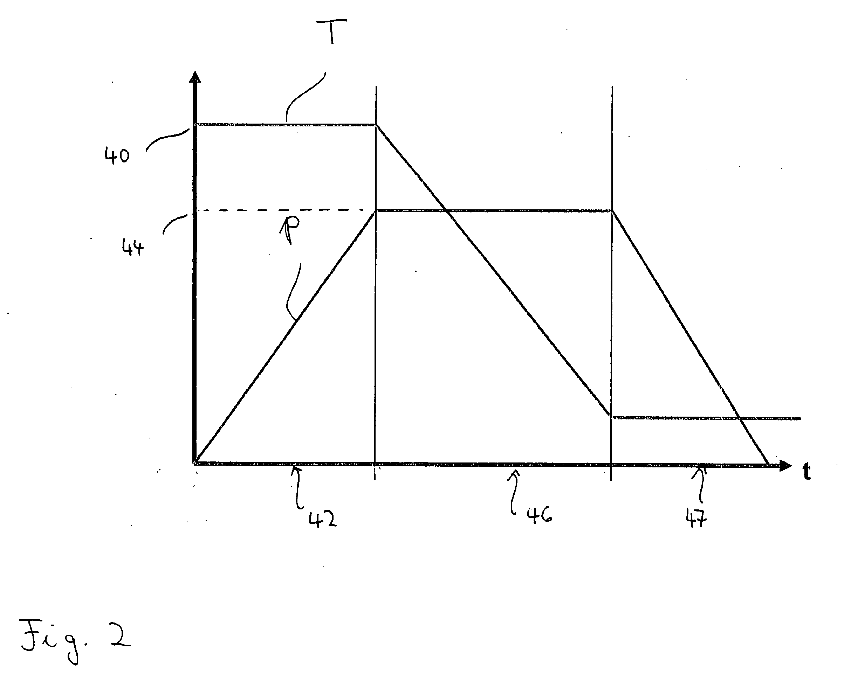

In Figur 2 ist schematisch ein beispielhafter Verfahrensablauf anhand eines Temperatur-Diagramms und eines Druck-Diagramms gezeigt.

### Die Verfahrensführung ist wie folgt:

Nach Erhitzung des Prüflings (Bauteil-Vorkörper) auf eine bestimmte Temperatur 40, bei der der Prüfling fließfähig ist, wird ein hydrostatischer Druck ausgeübt. Die Temperatur 40 ist dabei eine Temperatur jenseits der Glasübergangstemperatur des Matrixmaterials. Der hydrostatische Druck wird in einem Zeitintervall 42 hochgefahren, bis ein Druckniveau 44 erreicht wird.

Beispielsweise wird der Druck (über den Stempel 12) linear hochgefahren, wie in Figur 2 gezeigt. Es sind jedoch auch andere Druckverläufe möglich. Grundsätzlich ist es beispielsweise auch möglich, daß in dem Intervall 42 ein konstantes Druckniveau aufrechterhalten wird.

In einem weiteren, sich an das Zeitintervall 42 anschließenden Zeitintervall 46 wird der Prüfling abgekühlt, d. h. die Temperatur wird abgesenkt. Vorzugsweise wird das erreichte Druckniveau 44 in diesem Abkühlungsintervall 46 aufrechterhalten.

Nach der Abkühlung des Prüflings wird in einem weiteren Zeitintervall 47, welches sich an das Zeitintervall 46 anschließt, der Druck zurückgenommen auf atmosphärischen Druck. Es liegt dann ein fertiges Bauteil vor (das eventuell nachbearbeitet wird).

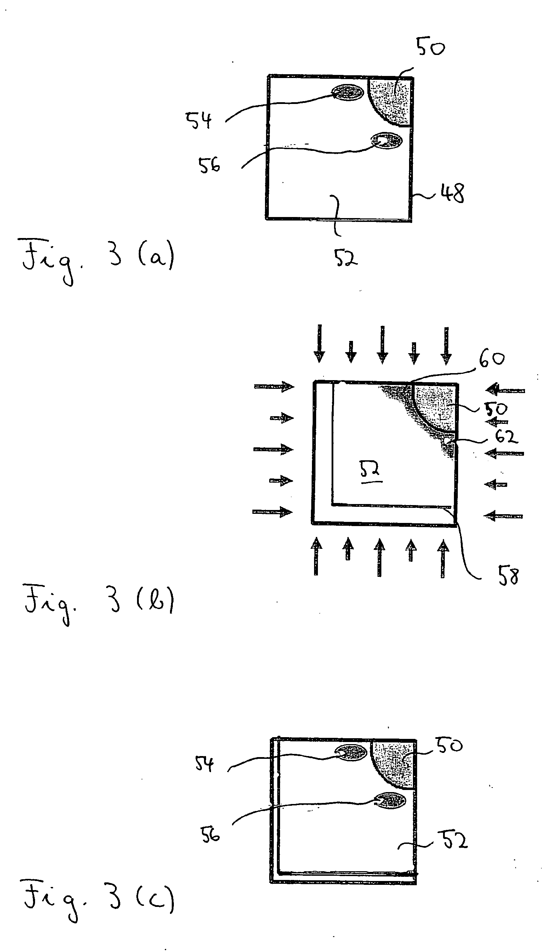

In den Figuren 3(a) bis 3(c) sind die mikroskopischen Vorgänge bei der Bauteilherstellung schematisch gezeigt. In Figur 3(a) ist der Ausgangszustand des Bauteil-Vorkörpers nach der Konsolidierung und vor der Ausübung eines hydrostatischen Drucks anhand einer Einheitszelle 48 gezeigt. Eine Faser 50 ist von Matrixmaterial 52 umgeben. Angedeutet sind zwei Bereiche 54 und 56 im Matrixmaterial. (Aus darstellerischen Gründen werden die Bereiche 54 und 56 in einem übertrieben großen Abstand von der Faser 50 gezeigt.) Diese Bereiche im Matrixmaterial unterliegen einem Zug in Umfangsrichtung (bezogen auf die Faser 50) aufgrund der unterschiedlichen Eigenschaften und insbesondere unterschiedlichen thermischen Ausdehnungskoeffizienten zwischen der Faser 50 und dem Matrixmaterial 52.

Bei fließfähigem Matrixmaterial wird erfindungsgemäß ein hydrostatischer Druck aufgebracht. Dies ist in Figur 3(b) angedeutet. Der hydrostatische Druck führt zu einer Volumenänderung der Einheitszelle 48 (in Figur 3(b) angedeutet durch die Zelle 58). Diese Volumenänderung führt in einem Grenzbereich 60 zwischen dem Matrixmaterial 52 und der Faser 50 zu einem mechanischen Gestaltänderungspotential. Das Gestaltänderungspotential wiederum führt zu einer Plastifizierung in dem Grenzbereich 60, d. h. die Gestaltänderungsenergie wird mindestens teilweise in dissipative Energie umgesetzt, die eine Plastifizierung bewirkt. Es bildet sich dann im Grenzbereich 60 ein Plastifizierungsbereich 62 aus. Durch die Plastifizierung im Grenzbereich 60 läßt sich der Zug in den Bereichen 54, 56 abbauen und es läßt sich unter Umständen sogar ein Druck in der Umfangsrichtung bezogen auf die Faser 50 erzeugen.

In Figur 3(c) ist schematisch der Endzustand (d. h. das fertige Bauteil) gezeigt. In den Bereichen 54 und 56 liegt jetzt ein Druck in Umfangsrichtung vor. Da die Faser 50 unter Zug in der Umfangsrichtung steht (zumindest in der Nähe des Grenzbereichs 60), sind das Matrixmaterial 52 (oben beispielhaft erläutert anhand der Bereiche 54 und 56) und die Faser 50 aneinander angepaßt, so daß die Eigenspannungen in der Matrix reduziert sind.

## Patentansprüche

1. Verfahren zur Herstellung eines Bauteils aus einem Faserverbundwerkstoff mit einer Matrix, in die Fasern eingelagert sind, bei dem bei fließfähigem oder kriechfähigem Matrixmaterial ein hydrostatischer Druck auf einen Bauteil-Vorkörper ausgeübt wird.

2. Verfahren nach Anspruch 1, **dadurch gekennzeichnet, daß** das Matrixmaterial durch Erhitzen fließfähig oder kriechfähig gemacht wird.

3. Verfahren nach Anspruch 1 oder 2, **dadurch gekennzeichnet, daß** bei Ausübung des hydrostatischen Drucks die Fließgrenze des Matrixmaterials erreicht oder überschritten ist oder ein Kriechniveau erreicht ist.

4. Verfahren nach einem der vorangehenden Ansprüche, **dadurch gekennzeichnet, daß** der hydrostatische Druck so gewählt wird, daß die Eigenspannungen im Bauteil beeinflußt werden.

5. Verfahren nach einem der vorangehenden Ansprüche, **dadurch gekennzeichnet, daß** der hydrostatische Druck so gewählt wird, daß die Eigenspannungen im Bauteil gezielt eingestellt werden.

6. Verfahren nach einem der vorangehenden Ansprüche, **dadurch gekennzeichnet, daß** der hydrostatische Druck in Abhängigkeit des Verhältnisses der Kompressibilität des Matrixmaterials zur Kompressibilität der Fasern gewählt wird.

7. Verfahren nach einem der vorangehenden Ansprüche, **dadurch gekennzeichnet, daß** der hydrostatische Druck oberhalb 500 bar liegt.

8. Verfahren nach einem der vorangehenden Ansprüche, **dadurch gekennzeichnet, daß** der hydrostatische Druck extern auf den Bauteil-Vorkörper aufgebracht wird.

9. Verfahren nach einem der vorangehenden Ansprüche, **dadurch gekennzeichnet, daß** ein hydrostatischer Druck nach Erhitzung des Matrixmaterials vor einer Abkühlphase ausgeübt wird.

10. Verfahren nach einem der vorangehenden Ansprüche, **dadurch gekennzeichnet, daß** ein hydrostatischer Druck ausgeübt wird, bis der Bauteil-Vorkörper Umgebungstemperatur erreicht.

11. Verfahren nach einem der vorangehenden Ansprüche, **dadurch gekennzeichnet, daß** hydrostatischer Druck ausgeübt wird, bis der Bauteil-Vorkörper ausgehärtet ist und/oder das Matrixmaterial nicht mehr fließfähig oder kriechfähig ist.

12. Verfahren nach einem der vorangehenden Ansprüche, **dadurch gekennzeichnet, daß** das Matrixmaterial einen höheren thermischen Ausdehnungskoeffizienten hat als das Fasermaterial.

13. Verfahren nach einem der vorangehenden Ansprüche, **dadurch gekennzeichnet, daß** die Fasern ein höheres E-Modul aufweisen als das Matrixmaterial.

14. Verfahren nach einem der vorangehenden Ansprüche, **dadurch gekennzeichnet, daß** die Herstellung der Fließfähigkeit oder Kriechfähigkeit bei einem vorkonsolidierten Bauteil-Vorkörper erfolgt.

15. Verfahren nach einem der Ansprüche 1 bis 13, **dadurch gekennzeichnet, daß** die Herstellung der Fließfähigkeit oder Kriechfähigkeit als Teil des Konsolidierungsprozesses des Bauteil-Vorkörpers erfolgt.

16. Verfahren nach einem der vorangehenden Ansprüche, **dadurch gekennzeichnet, daß** das Faserverbundwerkstoff-Bauteil langfaserverstärkt ist oder durch Endlosfasern verstärkt.

17. Verfahren nach einem der vorangehenden Ansprüche, **dadurch gekennzeichnet, daß** das Matrixmaterial ein thermoplastisches Material ist.

18. Verfahren nach einem der Ansprüche 1 bis 16, **dadurch gekennzeichnet, daß** das Matrixmaterial ein Duromer ist.

19. Verfahren nach einem der Ansprüche 1 bis 16, **dadurch gekennzeichnet, daß** das Matrixmaterial ein Metall ist.

20. Verfahren nach einem der vorangehenden Ansprüche, **dadurch gekennzeichnet, daß** der Bauteil-Vorkörper isostatisch gepreßt wird.

21. Verfahren nach Anspruch 20, **dadurch gekennzeichnet, daß** der Bauteil-Vorkörper beim isostatischen Pressen über eine Glasübergangstemperatur des Matrixmaterials geheizt ist.

22. Verfahren nach Anspruch 20 oder 21, **dadurch gekennzeichnet, daß** eine Abkühlung bei im wesentlichen konstantem Druck erfolgt.

23. Verfahren nach Anspruch 22, **dadurch gekennzeichnet, daß** nach der Abkühlung der Druck auf Atmosphärendruck zurückgenommen wird.

24. Faserverbundwerkstoff-Bauteil, welches mit dem Verfahren gemäß einem der vorangehenden Ansprüche hergestellt ist.

25. Vorrichtung zur Herstellung eines Faserverbundwerkstoff-Bauteils, umfassend eine Erwärmungseinrichtung (34), mit der ein Bauteil-Vorkörper (22) erhitzbar ist, um ein Matrixmaterial fließfähig oder kriechfähig zu machen, und eine Einrichtung (32) zum Ausüben eines hydrostatischen Drucks auf den Bauteil-Vorkörper (22).

26. Vorrichtung nach Anspruch 25, **dadurch gekennzeichnet, daß** die Druckausübungseinrichtung (32) einen Preßstempel (12; 14) umfaßt.

27. Vorrichtung nach Anspruch 25 oder 26, **dadurch gekennzeichnet, daß** eine Aufnahme (24) für den Bauteil-Vorkörper (22) vorgesehen ist, durch die der hydrostatische Druck auf den Bauteil-Vorkörper (22) übertragbar ist.

28. Vorrichtung nach Anspruch 27, **dadurch gekennzeichnet, daß** der Bauteil-Vorkörper (22) durch die Aufnahme (24) umgeben ist.

29. Vorrichtung nach Anspruch 27 oder 28, **dadurch gekennzeichnet, daß** die Aufnahme (24) aus Silikon hergestellt ist.

30. Vorrichtung nach einem der Ansprüche 25 bis 29, **dadurch gekennzeichnet, daß** die Druckausübungseinrichtung (32) so ausgebildet ist, daß während einer Abkühlphase des Bauteil-Vorkörpers (22) ein hydrostatischer Druck aufbringbar ist.

31. Vorrichtung nach einem der Ansprüche 25 bis 30, **dadurch gekennzeichnet, daß** durch die Druckausübungseinrichtung (32) hydrostatische Drücke größer als 500 bar aufbringbar sind.
